(19) Europäisches Patentamt
European Patent Office
Office européen des brevets

(11) Publication number: **0 184 598**
**A1**

# (12) EUROPEAN PATENT APPLICATION

(21) Application number: **84308494.8**

(22) Date of filing: **06.12.84**

(51) Int. Cl.[4]: **C 08 L 83/07**, C 08 L 83/08, C 08 K 5/54, C 08 K 5/07, C 08 J 3/28

(43) Date of publication of application: **18.06.86**
**Bulletin 86/25**

(84) Designated Contracting States: **CH DE FR GB IT LI SE**

(71) Applicant: **Toray Silicone Company Limited,**
**2-8 Nihonbashi Muromachi, Chuo-ku Tokyo 103 (JP)**

(72) Inventor: **Sasaki, Shosaku, 6-25-10, Aobadai, Ichihara-shi Chiba Pref. (JP)**
Inventor: **Hamada, Yuji, 1-6, Nishi Yushudai, Ichihara-shi Chiba Pref. (JP)**

(74) Representative: **Laredo, Jack Joseph et al, Elkington and Fife High Holborn House 52/54 High Holborn, London, WC1V 6SH (GB)**

## (54) Ultraviolet and electron-beam curable polyorganosiloxane composition.

(57) A polyorganosiloxane composition of an alkenyl-containing polyorganosiloxane, a polyorganohydrogensiloxane, a room temperature inhibiting amount of a mercapto-containing organosilicon compound, a platinum group metal catalyst, and a sensitizer can be cured by ultraviolet radiation or electron beam radiation in a short time to make resins, elastomers, gels, or foams. Such composition without the sensitizer can be cured with electron beam radiation. These compositions exhibit room temperature stability.

EP 0 184 598 A1

# ULTRAVIOLET AND ELECTRON-BEAM CURABLE POLYORGANOSILOXANE COMPOSITION

This invention relates to a polyorganosiloxane composition which can be cured by ultraviolet or electron beam radiation.

Polyorganosiloxane compositions are usually cured by heating at elevated temperatures for long periods of time. Some polyorganosiloxane compositions can be cured by ultraviolet or electron beam radiation at room temperature or low temperatures in short periods of time and have been in demand recently in order to increase productivity and satisfy diverse applications. Polyorganosiloxane compositions which can be cured by ultraviolet or electron beam radiation are described in United Kingdom Patent Specification No. 1,433,461, published April 28, 1976, and in U.S. Patent No. 4,064,027, issued December 20, 1977, to G. A. L. Gant. The compositions described in these patents are comprised of a vinyl group-containing polyorganosiloxane, a polyorganohydrogensiloxane, and a sensitizer in a quantity sufficiently large to provide photosensitization. Compositions are also described which additionally comprise a mercapto functional silicone to accelerate the cure of the composition. These compositions exhibit drawbacks such as a slow curing rate, curing of the surface only and problems in obtaining a uniform curing of the interior. Furthermore, a composition composed of a mercapto group-containing polyorganosiloxane, a vinyl group-containing polyorganosiloxane, and a sensitizer in a quantity sufficiently large to provide photosensitization cures faster than the above-mentioned compositions; however, it remains an unsatisfactory curing time. The composition

described in Japanese Kokai Patent No. 55-125123[80-125123] which is composed of a vinyl group-containing polyorganosiloxane and an organoperoxide has the disadvantages of a problematic surface cure and the requirement of a lengthy curing time.

Various methods were examined by the present inventors in order to develop a new curable polyorganosiloxane composition which would not suffer from the disadvantages of the prior art polyorganosiloxane compositions which are cured by ultraviolet or electron beam radiation. A polyorganosiloxane composition which exhibits excellent storage stability and which is uniformly cured in its interior in a short period of time under ultraviolet or electron beam radiation was discovered as a result of this effort.

Summary of the Invention

This invention relates to an ultraviolet radiation-curable polyorganosiloxane composition comprising (a) 100 parts by weight of an alkenyl-containing polyorganosiloxane having per molecule at least two organosiloxane units of the general formula

$$R^1_aR^2_bSiO_{(4-a-b)/2}$$

wherein each $R^1$ is selected from an alkenyl radical having from 2 to 4 inclusive carbon atoms per radical, each $R^2$ is a radical selected from the group consisting of alkyl, aryl, aralkyl, alkaryl, and halogenated alkyl, a is 1, 2, or 3, b is 0, 1, or 2, and the sum of a plus b is 3 or less, and any other siloxane units being selected from one or more general unit formulae of the group consisting of

$$R^2SiO_{3/2},\ R^2_2SiO_{2/2},\ R^2_3SiO_{1/2},\ \text{and}\ SiO_{4/2}$$

wherein $R^2$ is defined above, (b) a polyorganohydrogensiloxane having per molecule at least two hydrogensiloxane units of the general formula

$$H_cR^3_dSiO_{(4-c-d)/2}$$

wherein each $R^3$ is a monovalent hydrocarbon radical, $\underline{c}$ is 1, 2, or 3, $\underline{d}$ is 0, 1, or 2, and the sum of $\underline{c}$ plus $\underline{d}$ is 3 or less, and any other siloxane units being selected from one or more general unit formulae of the group consisting of

$$R^2SiO_{3/2},\ R^2_2SiO_{1/2},\ R^2_3SiO_{1/2},\ \text{and}\ SiO_{4/2}$$

wherein $R^2$ is defined above, said polyorganohydrogensiloxane being present in an amount sufficient to provide from 0.2 to 5 inclusive moles of silicon-bonded hydrogen atoms per mole of alkenyl radical in (a), (c) a room temperature inhibiting amount of a mercapto-containing organosilicon compound selected from the group consisting of mercapto-containing polyorganosiloxane (I), mercapto-containing silane (II), and mixtures thereof (III), where (I) contains at least one siloxane unit of the general formula

$$(HSR^4)_eR^2_fSiO_{(4-e-f)/2}$$

wherein each $R^4$ is a divalent radical selected from the group consisting of divalent hydrocarbon radicals and halogenated divalent hydrocarbon radicals, $R^2$ is defined above, $\underline{e}$ is 1, 2, or 3, $\underline{f}$ is 0, 1, or 2, and the sum of $\underline{e}$ plus $\underline{f}$ is 3 or less, and any other siloxane units being selected from one or more general unit formulae of the group consisting of

$$R^2SiO_{3/2},\ R^2_2SiO_{2/2},\ R^2_3SiO_{1/2},\ \text{and}\ SiO_{4/2}$$

wherein $R^2$ is defined above and there being at least five siloxane units per molecule of (I); (II) is a silane of the general formula

$$(HSR^4)_eR^2_fSi(OR^6)_g$$

wherein $R^4$, $R^2$, $\underline{e}$, and $\underline{f}$ are defined above, each $R^6$ is a radical selected from the group consisting of hydrogen atom, methyl, propyl, phenyl, and 2-phenylethyl, $\underline{g}$ is 1, 2, or 3, and the sum of $\underline{e}$ plus $\underline{f}$ plus $\underline{g}$ is four; (d) from 1 to 1,000 parts by weight platinum group metal which is present as elemental platinum group metal, as a compound, or complex of a platinum group metal, based on one million parts by weight of the combined weight of (a) and (b), and (e) a sensitizer present in an amount sufficient to photosensitize the composition and cause the composition to cure when exposed to ultraviolet radiation.

This invention also relates to an electron beam curable polyorganosiloxane composition comprising (a), (b), (c), and (d) as defined above.

## Detailed Description of the Invention

The composition of this invention has a pot life at room temperature which is sufficiently long for practical applications while it is rapidly cured in its interior by ultraviolet or electron beam radiation even under an atmosphere containing oxygen to produce a resin, elastomer, gel, or foam.

The alkenyl-containing polyorganosiloxane, (a), of this invention contains at least two organosiloxane units of the general formula

(1) $$R^1_aR^2_bSiO_{(4-a-b)/2}$$

wherein $R^1$, $R^2$, $\underline{a}$, and $\underline{b}$ are defined above. Polyorganosiloxane, (a), may contain only these kinds of

organosiloxane units of general formula (1) or it may also additionally contain other kinds of organosiloxane units. At least two organosiloxane units of general formula (1) must be present in each molecule from the standpoint of curability. The molecular configuration of this polyorganosiloxane can be straight-chain, branched, cyclic, or network. The degree of polymerization is two or greater while the upper limit is about 10,000 from the standpoint of the usual polymerizability.

The alkenyl radical represented by $R^1$ can contain 2 to 4 inclusive carbon atoms which include vinyl, propenyl, and butenyl radicals. Each $R^2$ is a monovalent hydrocarbon radical or halogenated monovalent hydrocarbon radical other than an alkenyl radical. Examples of the $R^2$ are alkyl radicals such as methyl, ethyl, propyl, butyl, and octyl; aralkyl radicals such as 2-phenylethyl and 2-phenylpropyl; halogenated alkyl radicals such as 3-chloropropyl, 2-methyl-3-chloropropyl, 3,3,3-trifluoropropyl; aryl radicals such as phenyl; and alkaryl radicals such as tolyl. The cited monovalent radicals generally contains 1 to 20 carbon atoms. $\underline{a}$ is an integer with a value of 1 to 3, $\underline{b}$ is an integer with a value of 0 to 2, and $\underline{a}$ plus $\underline{b}$ is an integer with a value of three or less. The units in which the combinations of ( $\underline{a}$ = 1, $\underline{b}$ = 2), ( $\underline{a}$ = 1, $\underline{b}$ = 1) and ( $\underline{a}$ = 1, $\underline{b}$ = 0) appear are the easiest to synthesize.

The organosiloxane units other than the organosiloxane unit with general formula (1) can be chosen from siloxane units of the general formulae $R^2SiO_{3/2}$ unit, the $R^2_2SiO_{2/2}$ unit, the $R^2_3SiO_{1/2}$ unit, and the $SiO_{4/2}$ unit. Examples of $R^2$ are the same as cited for the $R^2$ in the units of general formula (1).

The above polysiloxane may contain small amounts of silanol groups and silicon-bonded alkoxy groups.

Examples of the above-mentioned (a) are dimethylvinylsiloxy-terminated polydimethylsiloxane, dimethylallylsiloxy-terminated polydimethylsiloxane, phenylmethylvinylsiloxy-terminated diphenylsiloxane-dimethylsiloxane copolymer, trimethylsiloxy-terminated methylvinylsiloxane-dimethylsiloxane copolymer, dimethylvinylsiloxy-terminated dimethylsiloxane-methylvinylsiloxane copolymer, vinylpolysilsesquioxane, and copolymers composed of dimethylvinylsiloxane units and $SiO_4$ units.

The polyorganohydrogensiloxane, (b), necessarily contains organohydrogensiloxane units of the general formula

(2) $$H_cR^3_dSiO_{(4-c-d)/2}$$

wherein $R^3$, c, and d are defined above. The polyorganohydrogensiloxane, (b), may contain only organosiloxanes units of general formula (2) or it may also additionally contain other kinds of organosiloxane units. At least two organosiloxane units of general formula (2) must be present in each molecule from the standpoint of curability. The molecular configuration of the polyorganohydrogensiloxane is straight-chain, branched, cyclic, or network. The degree of polymerization is two or greater with an arbitrary upper limit; however, the upper limit is usually 2,000 from the standpoint of polymerizability. Each $R^3$ is a monovalent hydrocarbon radical and examples of these radicals are described above for $R^2$. Those monovalent hydrocarbon radicals contain 1 to 20 carbon atoms, c is an integer with a value of 1 to 3, d is an integer with a value of 0 to 2 and c plus d is three or less. The units in which the combinations of ( c=1,

d=2), ( c=1, d=1), or ( c=1, d=0) appear are the easiest to synthesize.

The examples of organosiloxane units other than the organohydrogensiloxane unit of general formula (2) are the same as those in polyorganosiloxane (a).

The above-mentioned polysiloxane may contain small amounts of silanol and silicon-bonded alkoxy groups.

Examples of (b) are dimethylhydrogensiloxy-terminated dimethylsiloxane-methylhydrogensiloxane copolymer, trimethylsiloxy-terminated dimethylsiloxane-methylhydrogensiloxane copolymer, dimethylphenylsiloxy-terminated dimethylsiloxane-methylhydrogensiloxane copolymer, and cyclic methylhydrogenpolysiloxanes.

Component (a) can be mixed with component (b) in any desired ratio; however, the quantity of component (b) is generally determined based on the criterion that 0.2 to 5 moles of silicon-bonded hydrogen are present per mol of alkenyl radical in component (a). Curing is inadequate at less than 0.2-fold on a molar basis. On the other hand, when the above quantity exceeds 5-fold on a molar basis, hydrogen gas bubbles are produced and the stability is unsatisfactory. However, when a foamed, cured product is to be produced from the composition, this quantity can exceed 5-fold (molar).

Component (c) is a mercapto-containing organosilicon compound selected from a mercapto-containing polyorganosiloxane (I), a mercapto-containing silane (II), and (III) mixtures of (I) and (II).

The mercapto-containing polyorganosiloxane of component (c) of this invention contains a mercapto group-containing organosiloxane unit of the general formula

(3) $$(HSR^4)_e R^2_f SiO_{(4-e-f)/2}$$

wherein $R^4$, $R^2$, e, and f are defined above. The mercapto-containing polyorganosiloxane may contain only organosiloxane units of general formula (3) or it may also additionally contain other kinds of organosiloxane units. The molecular configuration of this organopolysiloxane is straight-chain, branched, cyclic, or network. The degree of polymerization must be five or greater in order to avoid the generation of a foul odor.

The examples of organic groups which constitute organosiloxane units other than the organomercapto-siloxane unit of general formula (3) are the same as those cited for component (a). The above-mentioned polysiloxane may contain small amounts of silanol groups and silicon-bonded alkoxy groups in addition to the organic groups. In addition, instead of the above polyorganosiloxane, this invention can employ mercapto-containing silane of the general formula

(4) $$(HSR^4)_eR^2_fSi(OR^6)_g$$

wherein $R^4$, $R^2$, $R^6$, e, f, and g are defined above. Each $R^4$ is a divalent radical selected from divalent hydrocarbon radicals or halogenated divalent hydrocarbon radicals. Examples are alkylene radicals such as methylene, ethylene, propylene, and butylene; and haloalkylene such as chloroethylene. $R^6$ is the hydrogen atom,methyl, ethyl, propyl, phenyl, and 2-phenylethyl. e is an integer with a value of 1 to 3, f is an integer with a value of 0 to 2, g is an integer with a value of 1 to 3 and the sum of e, f and g is 4.

Component (c) exhibits an excellent effect in inhibiting the reaction at room temperature of a composition of this invention. When component (c) is absent, the pot life is extremely short to the point of

impracticality. That is, component (c) is a storage stabilizer of the composition of this invention; however, its reaction-inhibiting effect is inactivated upon ultraviolet or electron beam radiation and it exhibits the effect of accelerating the reaction. Component (c) should preferably be highly compatible with components (a) and (b) in order to exhibit a more satisfactory reaction-inhibiting effect. A small quantity of component (c) will exhibit an adequate effect in terms of reaction inhibition as long as it exhibits excellent compatibility. Also, the foul smell characteristic of the mercapto group will not be generated. The quantity of component (c) to be added to the composition of this invention is determined under the criterion that it is large enough to provide a practical pot life. This quantity is usually 0.05 to 5 parts by weight per 100 parts of the combined weight of components (a) and (b). However, the quantity of addition may be less than or exceed this range. Examples of component (c) are: gamma-mercaptopropylmethylsiloxane-dimethylsiloxane copolymer, gamma-mercaptoisobutylmethylsiloxane-dimethylsiloxane copolymer, gamma-mercaptopropylmethylsiloxane-methylphenylsiloxane copolymer, poly-gamma-mercaptopropylmethylsiloxane, poly-gamma-mercaptoisobutylmethylsiloxane, gamma-mercaptopropyltrimethoxysilane, gamma-mercaptoisobutyltrimethoxysilane, gamma-mercaptopropylmethyldimethoxysilane, gamma-mercaptoisobutylmethyldimethoxysilane, and gamma-mercaptoisobutylphenyldimethoxysilane. However, the mercapto-containing organosilicon compounds useful in this invention are not limited to the above examples, and includes mixtures, (III), of (I) and (II).

The platinum and platinum type compounds comprising the component (d) of this invention are the known substances used for the usual hydrosilylation reaction and include extremely finely divided platinum powder, extremely finely divided platinum powder which has been absorbed on a carbon powder support, chloroplatinic acid, alcohol-modified chloroplatinic acid, olefin complexes of chloroplatinic acid, chloroplatinic acid-vinylsiloxane coordination compounds, platinum black, palladium black, and rhodium catalysts. Among these catalysts, platinum compounds are preferred from the standpoint of curing acceleration. The quantity of component (d) must be adequate to cure a composition consisting of components (a) and (b) and is usually 1 to 1,000 ppm as the platinum group metal based on the combined quantity of components (a) and (b). This quantity obviously can be less than or exceed the above range depending on the catalytic activity.

The sensitizer comprising the component (e) of this invention increases the curing rate of compositions of this invention under ultraviolet radiation, but is not required for curing the composition under electron beam radiation. The sensitizer is a known sensitizer which is usually used for ultraviolet-curable resins. Examples are aromatic ketones such as acetophenone, benzophenone, trimethysilylated benzophenone, propiophenone, 3-methylacetophenone, 4-methylacetophenone, benzoin ethyl ether, a dimethylpolysiloxane whose two terminals are bonded with benzoin through an ether linkage, (4-isopropyl)phenyl-1-hydroxyisopropyl ketone, 4-allylacetophenone, 3-pentylacetophenone, and 4-methoxybenzophenone; amine compounds such as

triphenylamine and azobisisobutyronitrile. However, component (e) is not limited to the above examples.

The quantity of the above sensitizer is determined under the criterion that enough is present to photosensitize the composition. This quantity is generally 0.1 to 15 parts by weight per 100 parts by weight of the combined quantity of components (a) and (b). The above quantity obviously can be less than or exceed the range mentioned above depending on the type of sensitizer used.

Fillers and additives can additionally be added in order to increase the mechanical strength or nonflammability of the elastomer produced by curing the composition of this invention. Examples of the fillers and additives are fumed silica, quartz powder, glass fiber, carbon black, alumina, metal oxides such as iron oxide and titanium oxide, and metal carbonates such as calcium carbonate and magnesium carbonate. Appropriate pigments and dyes can be added unless they adversely affect curing. Compositions of this invention can be diluted with a appropriate solvent such as xylene, toluene, or hexane according to the application or purpose of the composition.

The polyorganosiloxane composition of this invention is stable at room temperature while it is cured even in its interior in a short period of time by ultraviolet or electron beam radiation. On the other hand, compositions consisting of a vinyl-containing polyorganosiloxane, a polyorganohydrogensiloxane, and a sensitizer to which a small amount of platinum was added exhibit a uniform curing in the interior, but suffer the drawback of extremely poor storage stability. The product resin, elastomer, gel, or foam rarely smells of mercaptan and

can be applied in any application of general curable polyorganosiloxane compositions.

This invention will be explained using demonstrational examples. "Parts" and "%" in the examples denote "parts by weight" and "wt%," respectively, and the viscosity was measured at 25°C.

Example 1

A dimethylvinylsiloxy-terminated dimethylsiloxane-methylvinylsiloxane copolymer (100 parts; viscosity, 1.5 Pa·s; vinyl group content, 1.5%) was mixed with a trimethylsiloxy-terminated polymethylhydrogensiloxane (5 parts; viscosity, 0.02 Pa·s) and poly-gamma-mercaptopropylmonomethylsiloxane (0.2 part). The resulting mixture was combined with 6 parts of (4-isopropyl)phenyl-1-hydroxyisopropyl ketone sensitizer and a vinylsiloxane-chloroplatinic acid complex (50 ppm platinum based on the total weight) and then mixed to homogeneity to produce Sample 1. The viscosity was 1.25 Pa·s at this point.

In Comparison Example 1, a composition (Sample 2) was prepared by the same method used to prepare the composition of Sample 1 with the exception that the poly-gamma-mercaptopropylmethylsiloxane was not used. The viscosity was 1.255 Pa·s at this time.

For a Comparison Example 2, a composition (Sample 3) was prepared by the same method as used to prepare the above composition with the exception that the (4-isopropyl)phenyl-1-hydroxyisopropyl ketone was not used. The viscosity was 1.36 Pa·s at this point. These compositions were allowed to stand at 25°C. The results showed that neither Sample 1 (this invention) nor Sample 3 (Comparison Example 2) increased in viscosity in 1 day while Sample 2 (Comparison Example 1) underwent an

increase in viscosity after the vinylsiloxane-chloroplatinic acid complex was added and mixed in with the result that it was completely converted into a rubbery material and was not usable for practical applications. Sample 1 (this invention) and Sample 3 (Comparison Example 2) were each coated (1.5 $g/m^2$) on polyester films and were radiated with a 160 W/cm high-pressure mercury lamp from a distance of 9 cm. The results showed that Sample 1 was completely cured in 0.3 second while Sample 3 (Comparison Example 2) was not completely cured even in 10 seconds.

In addition, neither the composition nor the cured product of Sample 1 smelled of mercaptan.

Example 2

A hydroxyl group-terminated dimethylsiloxane-methylvinylsiloxane copolymer gum (100 parts; vinyl group content, 1.0%) was dissolved in toluene (200 parts). The resulting solution was combined with a trimethylsiloxy-terminated polymethylhydrogensiloxane (3 parts; viscosity, 0.006 Pa's), gamma-mercaptoisobutylmethylsiloxane-dimethylsiloxane copolymer (0.4 part) and benzophenone (5 parts) and these were all subsequently dissolved with stirring to homogeneity.

An alcohol solution of chloroplatinic acid (30 ppm platinum based on the total weight of polysiloxane) was added and homogeneously dissolved into this solution to prepare a composition (Sample 4). The viscosity of the resulting composition was 12 Pa's.

As Comparison Example 3, a composition (Sample 5) was prepared by the method used to prepare the composition of Sample 4 with the exception that the gamma-mercaptoisobutylmethylsiloxane-dimethylsiloxane copolymer was not used. As Comparison Example 4, a

composition (Sample 6) was prepared by the same method used in preparing the composition of Sample 4 with the exception that the alcohol solution of chloroplatinic acid was not used. These compositions were allowed to stand at 25°C. The results showed that neither Sample 4 (this invention) nor Sample 6 (Comparison Example 4) underwent any change in viscosity over 2 days; however, Sample 5 (Comparison Example 3) underwent an increase in viscosity when it was combined with the alcohol solution of chloroplatinic acid with the result that it had completely gelled in 1 minute. Sample 4 (this invention) and Sample 6 (Comparison Example 4) were each then coated (1.0 g/$m^2$ solids) on aluminum plates and were subsequently radiated with a 160 W/cm high-pressure mercury lamp from a distance of 9 cm after the toluene had been evaporated. The results showed that Sample 4 (this invention) was completely cured in 0.4 second while Sample 6 (Comparison Example 4) was not completely cured even in 10 seconds. In addition, neither the composition nor cured product of Sample 4 smelled of mercaptan.

## Example 3

A dimethylvinylsiloxy-terminated dimethylsiloxane-methylphenylsiloxane-methylvinylsiloxane copolymer (100 parts; viscosity, 0.5 Pa·s; vinyl group content, 2.5%), a trimethylsiloxy-terminated methylhydrogensiloxane-dimethylsiloxane copolymer (6 parts; viscosity, 0.01 Pa·s), gamma-mercaptopropylmethylsiloxane-methylphenylsiloxane copolymer (0.3 part) and benzoin (2 parts) were stirred to give a homogeneous solution. Vinylsiloxane-chloroplatinic acid complex (60 ppm platinum based on the total weight) was mixed to

homogeneity with the above solution to prepare a composition (Sample 7). The viscosity was 0.42 Pa·s at this point.

As Comparison Example 5, a composition (Sample 8) was prepared by the same method used for preparing the composition of Sample 7 with the exception that methylbutynol was used to inhibit the hydrosilylation reaction instead of the gamma-mercaptopropylmethylsiloxane-methylphenylsiloxane present in the composition of Sample 7. These compositions were allowed to stand at 25°C; however, they exhibited little increase in viscosity after 2 days. Each of the compositions was coated (2.0 $g/m^2$) on a polyethylene-laminated kraft paper and then radiated with a 160 W/cm high-pressure mercury lamp from a distance of 9 cm. The results showed that Sample 7 (this invention) was cured in 0.3 second while it took 5 seconds to cure Sample 8 (Comparison Example 5). Neither the composition nor the cured product of Sample 7 smelled of mercaptan.

Example 4

A dimethylvinylsiloxy-terminated dimethylsiloxane-methylphenylsiloxane-methylvinylsiloxane copolymer (100 parts; viscosity, 1.0 Pa·s; vinyl group content, 1.7%) was combined with a trimethylsiloxy-terminated polymethylhydrogensiloxane (4 parts; viscosity, 0.02 Pa·s) and gamma-mercaptoisobutylmethyldimethoxysilane (0.2 part). The resulting mixture was subsequently combined with 3-pentylacetophenone (3 parts) and a vinylsiloxane-chloroplatinic acid complex (60 ppm platinum based on the total weight) and this was mixed to give a homogeneous composition (Sample 9). The viscosity was 0.93 Pa·s at this point.

As Comparison Example 6, a composition (Sample 10) was prepared by the same method as used for Sample 9 with the exception that the polymethylhydrogensiloxane was not added to the composition. The viscosity was 0.94 Pa·s at this point. These compositions were allowed to stand at 25°C. The results showed that both Sample 9 (this invention) and Sample 10 (Comparison Example 6) exhibited little increase in viscosity in 2 days. Each composition was coated (1.2 $g/m^2$) on glassine paper and then radiated with a 160 W/cm high-pressure mercury lamp from a distance of 9 cm. The results showed that Sample 9 (this invention) was completely cured in 0.3 second while Sample 10 (Comparison Example 6) was not completely cured even in 5 seconds although it underwent a significant increase in viscosity. The composition of Sample 9 had a slight smell of mercaptan while its cured product did not smell of mercaptan.

Example 5

A dimethylvinylsiloxy-terminated dimethylsiloxane-methylvinylsiloxane copolymer (100 parts; viscosity, 0.5 Pa·s; vinyl group content, 2.0%) was stirred with a trimethylsiloxy-terminated polymethylhydrogensiloxane (4 parts; viscosity, 0.02 Pa·s) and gamma-mercaptoisobutylmonomethyldimethoxysilane (0.3 part) to give a homogeneous solution. The resulting solution was mixed to homogeneity with benzophenone (2 parts) and vinylsiloxane-chloroplatinic acid complex (60 ppm platinum based on the total weight) to prepare a composition (Sample 11). The viscosity was 0.47 Pa·s at this point. A composition (Sample 12) was prepared by the same method used to prepare Sample 11 with the exception that benzophenone was not added to the composition. As comparison Example 7, a composition

(Sample 13) was prepared by the same method used to prepare Sample 11 with the exception that the vinylsiloxane-chloroplatinic acid complex was not added to the composition. These compositions were allowed to stand at 25°C. The results showed the Sample 11, Sample 12 (both were examples of this invention) and Sample 13 (Comparison Example 7) did not undergo an increase in viscosity in 2 days. Each composition (0.7 $g/m^2$) was coated on a polypropylene film and then radiated with an electron beam from a curtain-type electron beam generator. The results showed that Sample 11 and Sample 12 (both were examples of this invention) were both completely cured with an electron dose of 2 Mrad while Sample 13 (Comparison Example 7) was not completely cured even with 6 Mrad. Both the compositions of Sample 11 and Sample 12 smelled slightly of mercaptan while their cured products did not smell of mercaptan.

Example 6

A composition (Sample 14) was prepared by the method used to prepare Sample 1 of Example 1 with the exception that the (4-isopropyl)phenyl-1-hydroxyisopropyl ketone sensitizer was not added to the composition of Sample 1 and this was coated (1.5 $g/m^2$) on glassine paper and then radiated with an electron beam from a curtain-type electron beam generator. The results showed that the composition was completely cured with 3 Mrad. Neither the composition nor cured product smelled of mercaptan.

That which is claimed is:

1. An ultraviolet radiation - curable polyorganosiloxane composition comprising

(a) 100 parts by weight of an alkenyl-containing polyorganosiloxane having per molecule at least two organosiloxane units of the general formula

$$R^1_a R^2_b SiO_{(4-a-b)/2}$$

wherein each $R^1$ is selected from an alkenyl radical having from 2 to 4 inclusive carbon atoms per radical, each $R^2$ is a radical selected from the group consisting of alkyl, aryl, aralkyl, alkaryl, and halogenated alkyl, a is 1, 2, or 3, b is 0, 1, or 2, and the sum of a plus b is 3 or less, and any other siloxane units being selected from one or more general unit formulae of the group consisting of

$R^2SiO_{3/2}$, $R^2_2SiO_{2/2}$, $R^2_3SiO_{1/2}$, and $SiO_{4/2}$

wherein $R^2$ is defined above,

(b) a polyorganohydrogensiloxane having per molecule at least two hydrogensiloxane units of the general formula

$$H_cR^3_dSiO_{(4-c-d)/2}$$

wherein each $R^3$ is a monovalent hydrocarbon radical, c is 1, 2, or 3, d is 0, 1, or 2, and the sum of c plus d is 3 or less, and any other siloxane units being selected from one or more general unit formulae of the group consisting of $R^2SiO_{3/2}$, $R^2_2SiO_{1/2}$, $R^2_3SiO_{1/2}$, and $SiO_{4/2}$

wherein $R^2$ is defined above, said polyorganohydrogensiloxane being present in an amount sufficient to provide from 0.2 to 5 inclusive moles of silicon-bonded hydrogen atoms per mole of alkenyl radical in (a),

(c) a room temperature inhibiting amount of a mercapto-containing organosilicon compound selected from the group consisting of mercapto-containing polyorganosiloxane (I), mercapto-containing silane (II), and mixtures thereof (III), where (I) contains at least one siloxane unit of the general formula

$$(HSR^4)_e R^2_f SiO_{(4-e-f)/2}$$

wherein each $R^4$ is a divalent radical selected from the group consisting of divalent hydrocarbon radicals and halogenated divalent hydrocarbon radicals, $R^2$ is defined above, *e* is 1, 2, or 3, *f* is 0, 1, or 2, and the sum of *e* plus *f* is 3 or less, and any other siloxane units being selected from one or more general unit formulae of the group consisting of $R^2SiO_{3/2}$, $R^2_2SiO_{2/2}$, $R^2_3SiO_{1/2}$, and $SiO_{4/2}$

wherein $R^2$ is defined above there being at least five siloxane units per molecule of (I); (II) is a silane of the general formula

$$(HSR^4)_e R^2_f Si(OR^6)_g$$

wherein $R^4$, $R^2$, _e_, and _f_ are defined above, each $R^6$ is a radical selected from the group consisting of hydrogen atom, methyl, propyl, phenyl, and 2-phenylethyl, _g_ is 1, 2, or 3, and the sum of _e_ plus _f_ plus _g_ is four;

(d) from 1 to 1,000 parts by weight platinum group metal which is present as elemental platinum group metal or as a compound or complex of a platinum group metal, based on one million parts by weight of the combined weight of (a) and (b)

(e) a sensitizer present in an amount sufficient to photosensitize the composition and cause the composition to cure when exposed to ultraviolet radiation.

2. The composition according to claim 1 in which (c) is present in an amount of from 0.05 to 5 parts by weight based on 100 parts by weight of the combined weight of (a) and (b), and (e) is present in an amount of from 0.1 to 15 parts by weight based on 100 parts by weight of the combined weight of (a) and (b).

3. The composition according to claim 2 in which (a) is a dimethylvinylsiloxy terminated dimethylsiloxane - methylvinylsiloxane copolymer with a vinyl content less than three weight percent, (b) is a trimethylsiloxy terminated polymethylhydrogensiloxane, (c) is poly-gamma-mercaptopropylmonomethylsiloxane, (d) is a complex of a vinylsiloxane and chloroplatinic acid, and (e) is a sensitizer selected from the group consisting of 4-(isopropyl)phenyl-1-hydroxyisopropyl ketone, benzophenone, benzoin, and 3-pentylacetophenone.

4. The composition according to claim 2 in which (a) is a hydroxyl-terminated dimethylsiloxane-methylvinylsiloxane copolymer with a vinyl content less than three weight percent, (b) is a trimethylsiloxy terminated polymethylhydrogensiloxane, (c) is a gamma-mercaptoisobutylmethylsiloxane - dimethylsiloxane copolymer, (d) is an alcohol solution of chloroplatinic acid, and (e) is a sensitizer selected from the group consisting of 4-(isopropyl)phenyl-1-hydroxyisopropyl ketone, benzophenone, benzoin, and 3-pentylacetophenone.

5. The composition according to claim 2 in which (a) is a dimethylvinylsiloxy terminated dimethylsiloxane - methylphenylsiloxane - methylvinylsiloxane copolymer with a vinyl content less than three weight percent, (b) is a trimethylsiloxy terminated methylhydrogensiloxane - dimethylsiloxane copolymer, (c) is a gamma-mercaptopropylmethylsiloxane - methylphenylsiloxane copolymer, (d) is a complex of a vinylsiloxane and chloroplatinic acid, and (e) is a sensitizer selected from the group consisting of 4-(isopropyl)phenyl-1-hydroxyisopropyl ketone, benzophenone, benzoin, and 3-pentylacetophenone.

6. The composition according to claim 2 in which (a) is a dimethylvinylsiloxy terminated dimethylsiloxane - methylphenylsiloxane - methylvinylsiloxane copolymer with a vinyl content of less than 3 weight percent, (b) is a trimethylsiloxy terminated polymethylhydrogensiloxane, (c) is gamma-mercaptoisobutylmethyldimethoxysilane, (d) is a complex of a vinylsiloxane and chloroplatinic acid, and (e) is a sensitizer selected from the group consisting of 4-(isopropyl)phenyl-1-hydroxyisopropyl ketone, benzophenone, benzoin, and 3-pentylacetophenone.

7. An electron beam curable polyorganosiloxane composition comprising

(a) 100 parts by weight of an alkenyl-containing polyorganosiloxane having per molecule at least two organosiloxane units of the general formula

$$R^1_aR^2_bSiO_{(4-a-b)/2}$$

wherein each $R^1$ is selected from an alkenyl radical having from 2 to 4 inclusive carbon atoms per radical, each $R^2$ is a radical selected from the group consisting of alkyl, aryl, aralkyl, alkaryl, and halogenated alkyl, a is 1, 2, or 3, b is 0, 1, or 2, and

the sum of a plus b is 3 or less, and any other siloxane units being selected from one or more general unit formulae of the group consisting of

$R^2SiO_{3/2}$, $R^2_2SiO_{2/2}$, $R^2_3SiO_{1/2}$, and $SiO_{4/2}$

wherein $R^2$ is defined above,

(b) a polyorganohydrogensiloxane having per molecule at least two hydrogensiloxane units of the general unit formula

$$H_cR^3_dSiO_{(4-c-d)/2}$$

wherein each $R^3$ is a monovalent hydrocarbon radical, c is 1, 2, or 3, d is 0, 1, or 2, and the sum of c plus d is 3 or less, and any other siloxane units being selected from one or more general unit formulae of the group consisting of

$R^2SiO_{3/2}$, $R^2_2SiO_{1/2}$, $R^2_3SiO_{1/2}$, and $SiO_{4/2}$

wherein $R^2$ is defined above, said polyorganohydrogensiloxane being present in an amount sufficient to provide from 0.2 to 5 inclusive moles of silicon-bonded hydrogen atoms per mole of alkenyl radical in (a),

(c) a room temperature inhibiting amount of a mercapto-containing organosilicon compound selected from the group consisting of mercapto-containing polyorganosiloxane (I), mercapto-containing silane (II), and mixtures thereof (III), where (I) contains at least one siloxane unit of the general formula

$$(HSR^4)_e R^2_f SiO_{(4-e-f)/2}$$

wherein each $R^4$ is a divalent radical selected from the group consisting of divalent hydrocarbon radicals and halogenated divalent hydrocarbon radicals, $R^2$ is defined above, $\underline{e}$ is 1, 2, or 3, $\underline{f}$ is 0, 1, or 2, and the sum of $\underline{e}$ plus $\underline{f}$ is 3 or less, and any other siloxane units being selected from one or more general unit formulae of the group consisting of $R^2SiO_{3/2}$, $R^2_2SiO_{2/2}$, $R^2_3SiO_{1/2}$, and $SiO_{4/2}$

wherein $R^2$ is defined above there being at least five siloxane units per molecule of (I); (II) is a silane of the general formula

$$(HSR^4)_eR^2_fSi(OR^6)_g$$

wherein $R^4$, $R^2$, $\underline{e}$, and $\underline{f}$ are defined above, each $R^6$ is a radical selected from the group consisting of hydrogen atom, methyl, propyl, phenyl, and 2-phenylethyl, $\underline{g}$ is 1, 2, or 3, and the sum of $\underline{e}$ plus $\underline{f}$ plus $\underline{g}$ is four;

(d) from 1 to 1,000 parts by weight platinum group metal which is present as elemental platinum group metal or as a compound or complex of a platinum group metal, based on one million parts by weight of the combined weight of (a) and (b).

8. The composition according to claim 7 in which (c) is present in an amount of from 0.05 to 5 parts by weight based on 100 parts by weight of the combined weight of (a) and (b).

9. A cured product obtained by exposing the composition of claim 1 to ultraviolet radiation.

10. A cured product obtained by exposing the composition of claim 7 to an electron beam.

0184598

Application number

European Patent Office

# EUROPEAN SEARCH REPORT

EP 84 30 8494

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 064 027 (G.A.L. GANT) * Claims 1,10,11; example 12 * --- | 1,3 | C 08 L 83/07<br>C 08 L 83/08<br>C 08 K 5/54<br>C 08 K 5/07<br>C 08 J 3/28 |
| D,A | GB-A-1 433 461 (DOW CORNING CORP.) * Claims 1,10,11; example 10 * --- | 1,3 | |
| A | DE-A-2 736 499 (WACKER-CHEMIE GMBH) * Claim; page 10, lines 1-21; page 11, lines 3-16; page 12, lines 9-18 * --- | 1,3 | |
| A | DE-B-2 651 009 (DOW CORNING CORP.) * Claim 1; column 7, lines 43-59 * --- | 1,3 | TECHNICAL FIELDS SEARCHED (Int. Cl.4) |
| A | US-A-4 303 484 (M. TAKAMIZAWA et al.) * Abstract * --- | 1,3 | C 08 G 77/00<br>C 08 J 3/28<br>C 08 K 5/00<br>C 08 L 83/00 |
| A | US-A-4 472 563 (G. CHANDRA et al.) * Claim 1; abstract; column 2, lines 8-18; example 1 * --- | 1 | |
| A | US-A-3 816 282 (R.V. VIVENTI) * Claims * --- -/- | 1,7 | |

The present search report has been drawn up for all claims

| Place of search | Date of completion of the search | Examiner |
|---|---|---|
| BERLIN | 23-07-1985 | HASS C V F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

0184598

Application number

EP 84 30 8494

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-B-2 638 471 (DOW CORNING CORP.)<br>* Claims; example 1 *<br>--- | 7 | |
| A | GB-A-2 068 988 (GENERAL ELECTRIC CO.)<br>* Claims 4-7 *<br>----- | | |
| | | | TECHNICAL FIELDS SEARCHED (Int. Cl.4) |

The present search report has been drawn up for all claims

| Place of search | Date of completion of the search | Examiner |
|---|---|---|
| BERLIN | 23-07-1985 | HASS C V F |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document